Europäisches Patentamt

European Patent Office

Office européen des brevets

(11) Publication number: 0 368 593
A1

# EUROPEAN PATENT APPLICATION

(21) Application number: 89311475.1

(22) Date of filing: 06.11.89

(51) Int. Cl.⁵: C10M 161/00, C10M 173/00,
//(C10M161/00,135:36,149:12,
149:14),(C10M173/00,135:36,
149:12,149:14),C10N30:16

| | |
|---|---|
| Claims for the following Contracting State: ES. | (71) Applicant: **BUCKMAN LABORATORIES INTERNATIONAL, INC.** **1256 North McLean Boulevard P.O. Box 8305 Memphis Tennessee 38108-0305(US)** |
| (30) Priority: 04.11.88 US 267337 | |
| (43) Date of publication of application: **16.05.90 Bulletin 90/20** | (72) Inventor: **Hollis, Cecil George** **1767 Poplar Estates Parkway** **Germantown Tennessee 38138(US)** Inventor: **Sorrelle, Paul H.** **6151 Grayling Drive** **Jacksonville Florida 32256(US)** |
| (84) Designated Contracting States: **AT BE CH DE ES FR GB GR IT LI LU NL SE** | |
| | (74) Representative: **Watkins, Arnold Jack et al** **European Patent Attorney Frank B. Dehn & Co. Imperial House 15-19 Kingsway London WC2B 6UZ(GB)** |

(54) **Controlling fungal or bacterial growth in synthetic metalworking fluids.**

(57) A method of controlling fungal or bacterial growth in a synthetic metalworkig fluid comprising the addition to said fluid of

(a1) 5-chloro-2-methyl-4-isothiazolin-3-one
and
(a2) 2-methyl-4-isothiazolin-3-one
and
(b) an ionene polymer
wherein the ratio by weight of the sum of components (a1) and (a2) to component (b) is form 1:99 to 99:1 and wherein the amounts of the components are synergistically effective to control fungal or bacterial growth in said fluid.

Compositions containing these three components are also disclosed.

EP 0 368 593 A1

# CONTROLLING FUNGAL OR BACTERIAL GROWTH IN SYNTHETIC METALWORKING FLUIDS

The invention is directed to synergistic antimicrobial combinations of 5-chloro-2-methyl-4-isothiazolin-3-one and 2-methyl-4-isothiazolin-3-one with ionene polymers and their use in controlling fungal and/or bacterial growth in synthetic metalworking fluids.

Ionene polymers, i.e., cationic polymers containing quaternary nitrogens in the polymer backbone, are known to be useful in controlling bacteria and algae in various aqueous systems. U.S. Patents Nos. 3,874,870, 3,931,319, 4,027,020, 4,089,977, 4,506,081, and 4,581,058 give various examples of these polymers.

One such polymer is poly[oxyethylene-(dimethyliminio) ethylene(dimethyliminio) ethylene dichloride]. This polymer is manufactured and sold by Buckman Laboratories under the names Busan 77 and WSCP as a biocide used primarily in aqueous systems, including aqueous use-dilutions of metalworking fluids for bacterial control.

This polymer has been reported as useful, in combination with hexahydro-1,3,5-tris(2-hydroxyethyl)-S-triazine and sodium pyrithione, for facilitating the control of microorganisms, including fungi and bacteria, in a synthetic metalworking fluid. (Zabik et al., "Unique Use of a Cationic Microbicide for Extending the Life of a Synthetic Metalworking Fluid in a Manufacturing Environment," Journal of the Society of Tribologists and Lubrication Engineers, 677-679 (August 1988), based on a presentation at the 42nd Annual Meeting in Anaheim, California, May 11-14, 1987). This ionene polymer has also been sold for use in metalworking fluids.

Another such polymer is the ionene polymer produces by the condensation of equimolar amounts of dimethylamine and epichlorohydrin, as disclosed in U.S. Patent No. 4,111,679.

5-Chloro-2-methyl-4-isothiazolin-3-one and 2-methyl-4-isothiazolin-3-one are commercially available biocidal compounds manufactured and sold in combination by Rohm and Haas under the name Kathon 886. The Kathon 886 biocide is a 15% active mixture which contains 75% of the 5-chloro-compound and 25% of the 2-methyl- compound. This combination has been sold for use in a synthetic metalworking fluid

Both of these types of products are used to control microorganisms in industrial settings. Many industries experience problems caused by microorganisms. These problems are especially present where aqueous systems are used.

The machining industry is such an industry in which problem-causing microorganisms are encountered. In machining operations, metalworking fluids are used primarily to reduce friction and heat and thus reduce wear and prolong the life of equipment.

Unfortunately, metalworking fluids have many properties which make them an ideal medium for the growth of bacteria and fungi. These microorganisms can cause such problems as: the buildup of slime/microbial deposits on machine surfaces, the clogging of jets and lines, the deterioration of the metalworking fluid properties itself, enhanced corrosion, and health and odor problems. Although bacteria are important in the biodeterioration of cutting fluids, fungi and yeast play an important role as well, especially in synthetic fluids (Bennet E.O., "The Deterioration of Metalworking Fluids", Prog. Industrial Microbiology, 13, p. 121 (1974)).

As these microorganisms grow in the metalworking fluid, the fluid begins to deteriorate and lose many of its essential properties. Its pH can drop and other chemical changes can occur until the fluid no longer is able to provide adequate lubrication. At this point, the fluid must be replaced with fresh fluid. This is costly and results in loss of production time.

The previously mentioned problems have resulted in the extensive use of biocides in metalworking fluid systems. Biocides may be incorporated in fluid concentrate or added to diluted fluids once they are in the holding tanks of the machine works.

There are many commercially available biocides used today. Each of these biocides is generally useful, but each it attended by a variety of impediments. Some biocides have odor problems, or create hazards with respect to storage, use or handling, which limit their utility. Presently, no one type of compound has achieved on established predominance in the areas mentioned.

Economic factors should be considered before choosing a particular biocide for use in metalworking fluid systems. Such economic considerations apply to both the cost of the biocide and the expense of its application. The cost performance index of any biocide is derived from the basic cost of the material, its effectiveness per unit weight, the duration of its biocidal or biostatic effect in the system treated, and the ease and frequency of its addition to the system treated.

At present, none of the commercially available biocides is capable of exhibiting a prolonged biocidal effect. Instead, physical conditions, such as temperature and chemical reactivity with ingredients present in the system, often diminish or eliminate the effectiveness of the biocides. For example, many systems contain organic material which may react with a specific biocide or render it ineffective.

Several patents have been granted previously showing that Kathon 886 biocide behaves synergistically with other chemicals or classes of chemicals. U.S. Patent No. 3,929,561 discloses that Kathon 886 biocide can be blended with certain sulfones to produce a synergistic biocidal composition.

Furthermore, U.S. Patent No. 4,379,137 discloses the synergistic combination of certain ionene polymers, including Busan 77 polymer, with Kathon 886 biocide. These combinations are therein disclosed as useful in controlling bacteria in aqueous systems, and a test is reported concerning the efficacy of Kathon 886 biocide and an ionene polymer utilized in the wash water in air handling systems. However, one cannot predict that, because two biocides are synergistic in water, the two biocides will also be synergistic in a complex fluid such as a synthetic metalworking fluid. In particular, a synthetic metalworkig fluid contains organic and inorganic materials that could interfere with the activity of one or both of the biocides.

Kathon 886 biocide is usually used at a low concentrations, e.g., a few parts per million, to treat industrial aqueous systems. However, this dosage is not adequate to preserve systems in which heavy microbial growth occurs. Consequently, the dosage must be increased to significantly higher dosages to inhibit microbial growth. The high cost of Kathon 886 biocide makes its use at high dosages prohibitive. Also, Kathon 886 biocide, at the higher concentrations, may be also likely to cause irritation to those workers present during application.

Metalworking fluid systems in which heavy microbial growth occurs would benefit most from the practice of the present invention, described below. The practice of the present invention would nonetheless benefit many systems, whether or not heavy microbial growth occurs, because it provides for a more economical use of Kathon 886 biocide, an expensive biocide.

The present invention controls fungal or bacterial growth in a synthetic metalworking fluid. The invention encompasses a method of controlling fungal or bacterial growth in a synthetic metalworking fluid comprising the addition to said fluid of

(a1) 5-chloro-2-methyl-4-isothiazolin-3-one
and
(a2) 2-methyl-4-isothiazolin-3-one
and
(b) an ionene polymer
wherein the ratio by weight of the sum of components (a1) and (a2) to component (b) is from 1:99 to 99:1 and wherein the amounts of the components are synergistically effective to control fungal or bacterial growth in said fluid.

Components (a1), (a2) and (b) can be added to the metalworkig fluid together or separately, in any order. Conveniently components (a1) and (a2) may be added in the form of a mixture one with another.

Further aspects of the invention provide a composition comprising:

(a) a mixture of 5-chloro-2-methyl-4-isothiazolin-3-one and 2-methyl-4-isothiazolin-3-one; and

(b) an ionene polymer; wherein the ratio of component (a) to component (b) is from about 1:99 to about 99:1; and wherein the composition is formulated to control fungal or bacterial growth synergistically in a synthetic metalworking fluid;

and also methods of controlling fungal or bacterial growth in a synthetic metalworking fluid by the addition of said composition.

The invention can be obtained by addition of the components defined above to a concentrated synthetic metalworking fluid. In such case the invention encompasses a concentrated synthetic metalworking fluid containing components (a) and (b) as defined above, wherein the ratio of component (a) to component (b) is from about 1:99 to about 99:1; and wherein the amounts of the components (a) and (b) are synergistically effective to control fungal or bacterial growth when said fluid is diluted and used at a metalworking site.

The method can also be practiced by separate addition of the components (a) and (b) to the diluted synthetic metalworking fluid at the metalworking site. Such separate administration of components (a) and (b) can be done simultaneously or sequentially.

The ionene polymer may be chosen from a wide variety of known polymers based on compatibility of the ionene polymer with the metalworking fluid in use. Poly[oxyethylene(dimethylimino)-ethylene-(dimethyliminio)ethylene dichloride] is known to be compatible with synthetic metalworking fluids. Another ionene polymer known to be compatible is the condensation product of dimethylamine and epichlorohydrin.

The ratio of component (a) to component (b) may range from 1:99 to about 99:1, preferably 20:80 to 80:20, more preferably 40:60 to 60:40, and most preferably 50:50.

The benefits of the invention are most evident in systems that are highly contaminated with microorganisms. These are systems with bacterial and fungal counts greater than $1.0 \times 10^6$/mL which are incapable of

3

experiencing substantial count reduction when treated separately with low dosages of either Busan 77 polymer or Kathon 886 biocide. In these systems a low dosage of Kathon 886 biocide or Busan 77 polymer fails to provide adequate preservation.

One of the unique features of this invention is that when the 4-isothiazolin-3-one compounds are used in conjunction with an ionene polymer, it is possible in many instances, to reduce the total fungal or bacterial count to zero cells per mL and maintain it at this level. When either of the biocides is used alone (at the same concentration as when used in conjunction), it fails to achieve and maintain a zero level of microbial growth.

The synergistic activity of the combinations described above has been confirmed using standard laboratory techniques as illustrated in the examples below.

Synergism was determined by the method of Kull, F.C., Euman, P.C., Sylwestrowicz, H.D., and Mayer, R.L., Applied Microbiology 9:538-541 (1961) using the ratio:

$\frac{QA}{Qa} + \frac{QB}{Qb}$ wherein Qa = Concentration of Compound A, in parts per million, acting alone, which produced an endpoint.

Qb = Concentration of Compound B, in parts per million, acting alone, which produced and endpoint.

QA = Concentration of Compound A, in parts per million, in the mixture, which produced an endpoint.

QB = Concentration of Compound B, in parts per million, in the mixture, which produced an endpoint.

When the sum of QA/Qa + QB/Qb is greater than 1, antagonism is indicated, and when the sum is equal to 1, additivity is indicated. When less than one, synergism is demonstrated.

To disclose the nature of the present invention still more clearly, the following illustrative example is given. It is to be understood, however, that the invention is not limited to the specific conditions or details set forth in this example except insofar as such limitations are specified in the appended claims.

Example

Synergistic Combination of Kathon 886 biocide and Busan 77 polymer is Synthetic Metalworking Fluids.

The combination of Kathon 886 biocide and Busan 77 polymer was tested for bacterial and fungal control in a synthetic metalworking fluid. The results were analyzed for synergism using the method described above. The test method employed was the Standard Method for the Evaluation of Antimicrobial Agents in Aqueous Metalworking Fluids (ASTM Designation: E686-80).

The ASTM test is a multiple challenge test designed to simulate industrial conditions. The biocides are each added to 450 mL aliquots of a synthetic metalworking fluid dilution. Controls contained only one of the biocides or no biocide.

The metalworking fluid samples are then inoculated with 50 mL of a mixed, partially defined microbial culture and aerated on a specific time cycle. The cycle is composed of 5 days of aeration followed by two days without, which simulates an industrial work schedule. Every week, for a minimum of 6 weeks or until the test fails, the metalworking fluid samples are measured for microbial growth. This is done by enumerating the bacteria and fungi using standard plate-counting techniques. Aliquots were streaked and incubated on Saboraud dextrose agar to determine fungal survival.

The microorganisms used in the metalworking fluid inoculum included:
1) "Wild" fungi and bacteria obtained from a spoiled industrial fluid.
2) Staphylococcus aureus
3) Pseudomonas aeruginosa
4) Klebsiella pneumoniae
5) Escherichia coli

A microbial count of less than $1.0 \times 10^4$ colony forming units (cfu) per mL was indicative of very good preservation. This was also used as an endpoint for the synergism calculation.

TABLE 1

| Preservation Properties of Combination of Busan 77 polymer and Kathon 886 biocide in Synthetic Metalworking Fluid | | | |
|---|---|---|---|
| Sample | Biocide(s) | Bacteria cfu/mL | Fungi cfu/mL |
| 1 | 0 | $9.4 \times 10^7$ | $10^8$ |
| 2 | 5.0 ppm Kathon 886 | $1.36 \times 10^7$ | $2.14 \times 10^7$ |
| 3 | 10.0 ppm Kathon 886 | $3.2 \times 10^6$ | $6.2 \times 10^6$ |
| 4 | 20.0 ppm Kathon 886 | $4.5 \times 10^6$ | $1.22 \times 10^7$ |
| 5 | 50.0 ppm Kathon 886 | $3.0 \times 10^3$ | $3.7 \times 10^4$ |
| 6 | 75.0 ppm Kathon 886 | 0 | $1.2 \times 10^4$ |
| 7 | 100.0 ppm Kathon 886 | 0 | $5.0 \times 10^3$ |
| 8 | 20.0 ppm Busan 77 | $1.12 \times 10^7$ | $1.70 \times 10^7$ |
| 9 | 10.0 ppm Kathon 886 + 10.0 ppm Busan 77 | $1.20 \times 10^3$ | $1.12 \times 10^3$ |
| 10 | 20.0 ppm Kathon 886 + 10.0 ppm Busan 77 | 0 | 0 |
| 11 | 20.0 ppm Kathon 886 + 20.0 ppm Busan 77 | 0 | 0 |
| Note: Less than $10^4$ cfu/mL indicates adequate preservation and is used as an endpoint in the synergism calculations. Parts per million are caculated on "as supplied" basis, not an active ingredient basis. | | | |

From Table 1 is can be concluded that Kathon 886 biocide and Busan 77 polymer when used in conjunction provide better microbial preservation of a synthetic metalworking fluid than when used individually. A combination of 10.0 ppm Kathon 886 biocide and 10.0 ppm Busan 77 polymer provides preservation that higher concentrations of either Kathon 886 or Busan 77 polymer biocide alone fail to provide.

For example, it requires 100.0 ppm of Kathon 886 biocide to reduce the fungal count to that found when 10.0 ppm of both Busan 77 polymer and Kathon 886 biocide were used. Busan 77 polymer did not control fungi at 20.0 ppm, and it is known that it will not control fungi at any level up to 2000 ppm. Furthermore, it is possible to reduce the bacterial and fungal counts to zero and maintain that level by using Kathon 886 biocide and Busan 77 polymer in combination.

The calculations for evaluating synergism are shown in Table 2.

TABLE 2

| Synergism Calculations for Busan 77 polymer and Kathon 886 Bioicide in Synthetic Metalworking Fluid | | | | | | | |
|---|---|---|---|---|---|---|---|
| **(Bacteria)** | | | | | | | |
| Weight Ratio of A to B | Quantities Producing End Points (ppm) | | | | | | |
| | Qa | QA | Qb | QB | $\frac{QA}{Qa}$ | $\frac{QB}{Qb}$ | $\frac{QA}{Qa} + \frac{QB}{Qb}$ |
| 100/0 | 50.0 | -- | -- | -- | -- | -- | -- |
| 50/50 | -- | 10.0 | -- | 10.0 | .2 | .5 | .7 |
| 0/100 | -- | -- | 20.0 | -- | -- | -- | -- |
| **(Fungi)** | | | | | | | |
| Weight Ratio of A to B | Quantities Producing End Points (ppm) | | | | | | |
| | Qa | QA | Qb | QB | $\frac{QA}{Qa}$ | $\frac{QB}{Qb}$ | $\frac{QA}{Qa} + \frac{QB}{Qb}$ |
| 100/0 | 100.0 | -- | -- | -- | -- | -- | -- |
| 50/50 | -- | 10.0 | -- | 10.0 | .1 | .5 | .6 |
| 0/100 | -- | -- | 20.0 | -- | -- | -- | -- |

It can be concluded from Table 2 and its corresponding calculations that Kathon 886 biocide and Busan 77 polymer do behave synergistically to inhibit fungal and bacterial growth in synthetic metalworking fluids. Using the method of Kull et al., antimicrobial synergism has been demonstrated against both fungi and bacteria. In all of the calculations compound A,a is Kathon 886 biocide and compound B,b is Busan 77 polymer. For bacteria, the sum of the quotients QA/Qa and QB/Qb equals .7, which is less than 1 so synergism exists. Against fungi a lower value at .6 was shown; therefore, Kathon 886 biocide and Busan 77 polymer appear to exhibit better synergism against fungi than bacteria.

In interpreting Table 2, it should also be noted that Busan 77 polymer by itself does not offer much antimicrobial activity in metalworking fluids unless the concentration is significantly higher than the highest concentration tested. Therefore, in the synergism calculations a value of 20 ppm was used, even though a much higher value could have been used. Furthermore, increasing the level of Busan 77 polymer would not negatively affect the calculations - in fact it would only demonstrate greater synergism based on the method of Kull et al.

The synergistic antifungal and antibacterial combination described previously has synergistic activity when employed at appropriate concentrations and may be used to inhibit the growth of fungi and bacteria in metalworking fluids. It is obvious to those skilled in the art that the required synergistically effective amount (concentration) will vary with particular organisms and particular applications and can readily be determined by routine experimentation. Use of a synergistically effective amount enables the use of substantially smaller amounts of each component (a) and (b) than would be necessary for each component if used alone and than would be necessary if a mere additive effect from combining (a) and (b) were obtained.

In general, however, effective fungicidal and bactericidal response will be obtained when the synergistic combination is employed in concentrations ranging from about 0.1 to about 5,000 ppm 5-chloro-2-methyl-4-isothiazolin-3-one and 2-methyl-4-isothiazolin-3-one, preferably 0.1 to 100 ppm, and from about 0.1 to about 10,000 ppm of ionene polymer, preferably 0.1 to 500 ppm.

## Claims

1. A method of controlling fungal or bacterial growth in a synthetic metalworking fluid comprising the addition to said fluid of
(a1) 5-chloro-2-methyl-4-isothiazolin-3-one
and
(a2) 2-methyl-4-isothiazolin-3-one

6

and

(b) an ionene polymer

wherein the ratio by weight of the sum of components (a1) and (a2) to component (b) is from 1:99 to 99:1 and wherein the amounts of the components are synergistically effective to control fungal or bacterial growth in said fluid.

2. A method as claimed in claim 1, wherein said ratio is from about 20:80 to about 80:20.

3. A method as claimed in claim 2, wherein said ratio is from about 40:60 to about 60:40.

4. A method as claimed in claim 3, wherein said ratio is about 50:50.

5. A method as claimed in any preceding claim, wherein said ionene polymer is poly[oxyethylene-(dimethyliminio)-ethylene(dimethyliminio)ethylene dichloride].

6. A method as claimed in any one of claims 1 to 4, wherein said ionene polymer is the condensation product of about equimolar amounts of epichlorohydrin and dimethylamine.

7. A method as claimed in any preceding claim wherein components (a1) and (a2) are added to said metalworking fluid in the form of a mixture one with another.

8. A composition comprising:

(a) a mixture of 5-chloro-2-methyl-4-isothiazolin-3-one and 2-methyl-4-isothiazolin-3-one; and

(b) an ionene polymer;

wherein the ratio of component (a) to component (b) is from about 1:99 to about 99:1; and wherein the composition is formulated to control fungal or bacterial growth synergistically in a synthetic metalworking fluid.

9. A method of controlling fungal or bacterial growth in a synthetic metalworking fluid comprising the step of adding to said metalworking fluid the composition of claim 8 in an amount synergistically effective to control said fungal or bacterial growth.

10. A concentrated synthetic metalworking fluid containing

(a) a mixture of 5-chloro-2-methyl-4-isothiazolin-3-one and 2-methyl-4-isothiazolin-3-one; and

(b) an ionene polymer;

wherein the ratio of component (a) to component (b) is from about 1:99 to about 99:1; and wherein the amounts of components (a) and (b) are synergistically effective to control fungal or bacterial growth then said fluid is diluted and used at a metalworking site.

CLAIMS FOR THE FOLLOWING CONTRACTING STATE:ES

1. A method of controlling fungal or bacterial growth in a synthetic metalworking fluid comprising the addition to said fluid of

(a1) 5-chloro-2-methyl-4-isothiazolin-3-one and

(a2) 2-methyl-4-isothiazolin-3-one

and

(b) an ionene polymer

wherein the ratio by weight of the sum of components (a1) and (a2) to component (b) is from 1:99 to 99:1 and wherein the amounts of the components are synergistically effective to control fungal or bacterial growth in said fluid.

2. A method as claimed in claim 1, wherein said ratio is from about 20:80 to about 80:20.

3. A method as claimed in claim 2, wherein said ratio is from about 40:60 to about 60:40.

4. A method as claimed in claim 3, wherein said ratio is about 50:50.

5. A method as claimed in any preceding claim, wherein said ionene polymer is poly[oxyethylene-(dimethyliminio)ethylene(dimethyliminio)ethylene dichloride].

6. A method as claimed in any one of claims 1 to 4, wherein said ionene polymer is the condensation product of about equimolar amounts of epichlorohydrin and dimethylamine.

7. A method as claimed in any preceding claim wherein components (a1) and (a2) are added to said metalworking fluid in the form of a mixture one with another.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 930 865 (SCHÜLKE & MAYR GmbH) * Page 4, lines 1-12; page 11, table 1; page 9, line 12 - page 10, line 1 * & US-A-4 379 137 (Cat. D) --- | 1-5,7-10 | C 10 M 161/00 C 10 M 173/00 // (C 10 M 161/00 C 10 M 135:36 C 10 M 149:12 C 10 M 149:14 ) (C 10 M 173/00 C 10 M 135:36 C 10 M 149:12 C 10 M 149:14 ) C 10 N 30:16 |
| Y | GB-A-1 461 909 (IMPERIAL CHEMICAL INDUSTRIES) * Page 1, line 30 - page 2, line 4; page 2, line 111 - page 3, line 10 * --- | 1-5,7-10 | |
| D,A | US-A-4 111 679 (S.A. SHAIR) * Column 1, lines 5-59 * --- | 6 | |
| A | DE-A-2 800 739 (BACILLOLFABRIK) * Page 2, lines 1-11; page 3, lines 14-29; page 5, lines 6-10 * --- | 1,7-10 | |
| D,A | US-A-4 089 977 (H.A. GREEN) * Column 1, lines 1-22 * --- | 1 | |
| A | CA-A-1 131 404 (ROHM AND HAAS) * Claims 1,6-8 * ----- | 1-4,7-10 | **TECHNICAL FIELDS SEARCHED (Int. Cl.5)** C 10 M A 01 N |

The present search report has been drawn up for all claims

| Place of search | Date of completion of the search | Examiner |
|---|---|---|
| THE HAGUE | 16-02-1990 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document